(19) Europäisches Patentamt

European Patent Office

Office européen des brevets

(11) **EP 1 918 676 A2**

(12) **EUROPEAN PATENT APPLICATION**

(43) Date of publication:
**07.05.2008 Bulletin 2008/19**

(51) Int Cl.:
***G01C 19/56*** *(2006.01)*

(21) Application number: **07119673.7**

(22) Date of filing: **30.10.2007**

(84) Designated Contracting States:
**AT BE BG CH CY CZ DE DK EE ES FI FR GB GR HU IE IS IT LI LT LU LV MC MT NL PL PT RO SE SI SK TR**
Designated Extension States:
**AL BA HR MK RS**

(30) Priority: **31.10.2006  US 554890**

(71) Applicant: **Honeywell International, Inc.**
**Morristown, NJ 07962 (US)**

(72) Inventor: **Platt, William P.**
**Forest Lake, MN 55025 (US)**

(74) Representative: **Buckley, Guy Julian**
**Patent Outsourcing Limited**
**1 King Street**
**Bakewell**
**Derbyshire DE45 1DZ (GB)**

(54) **Rapid readout logic for MEMS gyroscope**

(57)  A system and method for deriving an angular rate includes receiving a motor pick off signal received from a motor pick off of from a MEMS gyroscope. Receiving a sensing pick off signal received from a sensing pick off from the MEMS gyroscope allows the determining of a phase relationship between the motor pick off signal and the sensing pick off signal. Determining an angular rate is based upon an amplitude of the sensing pick off signal. Determining the whether the sign of the rotational rate is positive or negative is based upon the phase relationship of the sensing pick off signal from a MEMS gyroscope relative to the motor pick off signal received from the motor pick off.

FIG.4

## Description

## BACKGROUND OF THE INVENTION

Microelectromechanical Systems ("MEMS") gyroscopes have found application in diverse platforms. In at least one application, angular information including a rotational rate and direction are needed as soon as possible after the device is powered. In, for example, military applications where the MEMS gyroscope is dormant until firing a weapon, it is advantageous to allow the weapon to orient itself in mid-flight. Rapid dissemination of rotational data to the navigation system is a factor in facilitating in-flight navigation.

The conventional MEMS gyroscope determines angular rate by demodulating a sense pick-off signal ("SPO signal") with respect to a motor pick-off signal ("MPO signal") at a motor pick-off. The motor pick-off signal drives a motor drive to initiate oscillation of a proof mass along a motor axis (x-axis). Generally, until the proof mass is suitably oscillating at a natural resonant frequency, no information is demodulated. Demodulation of the SPO signal with respect to the MPO signal prior to the proof mass reaching its natural resonant frequency of oscillation has been deemed to be too imprecise for use. There are many types of demodulators, each with respective advantages and disadvantages (speed, cost, sensitivity to vibration), though each is generally normalized only for use at the natural resonant frequency of the MEMS gyroscope.

What is needed is a device that can monitor angular rate during a validity interval until the proof mass reaches its natural resonant frequency of oscillation to provide more immediate input to an inertial measurement unit.

## SUMMARY OF THE INVENTION

A system and method for deriving an angular rate includes receiving a motor pick off signal received from a motor pick off of from a MEMS gyroscope. Receiving a sensing pick off signal received from a sensing pick off from the MEMS gyroscope allows the determining of a phase relationship between the motor pick off signal and the sensing pick off signal. Determining an angular rate is based upon an amplitude of the sensing pick off signal. Determining the whether the sign of the rotational rate is positive or negative is based upon the phase relationship of the sensing pick off signal from a MEMS gyroscope relative to the motor pick off signal received from the motor pick off.

As the MEMS gyroscope is energized, signals from each of the sense pick-off (SPO) and motor pick-off (MPO) are generated by movement of a proof mass within the MEMS gyroscope. Determining a phase relationship between the SPO and MPO signals will indicate a direction of rotational rate. If rotation of the MEMS gyroscope results in the phase of the SPO signal leading the MPO signal, the rotational rate may be arbitrarily designated as positive. Conversely if the rotation of the MEMS gyroscope results in the phase of the SPO signal lagging the MPO signal, the same convention describes the rotational rate as negative.

Additionally, the amplitude of the SPO signal indicates the magnitude of the rotational rate the MEMS gyroscope is experiencing. An embodiment of a signal processor monitors both the phase relationship of the SPO signal to the MPO signal and the amplitude of the SPO signal to generate information describing the rotational rate the MEMS gyroscope is experiencing. The processor yields useful information even before the conventional demodulator can yield suitable data from the SPO and MPO signals. Upon expiration of a designated validity interval, the system switches from using the processor to demodulate the SPO signal against the MPO signal to conventional demodulation.

In one embodiment, a validity interval is designated to be a temporal interval, by way of non-limiting example, the first 1/2 second of operation after which conventional demodulation would occur according to more conventional (and higher performance) detection schemes. Generally, SPO and MPO signals do not conform to demodulation according to standard calibration values during a start up sequence (until the expiration of the validity interval when the MPO signal is deemed stable). In one non-limiting embodiment, the processor compensates for different performance during the validating interval by dividing the amplitude of the SPO signal by an amplitude of the MPO signal in order to make the results more linear.

## BRIEF DESCRIPTION OF THE DRAWINGS

The preferred and alternative embodiments of the present invention are described in detail below with reference to the following drawings:

FIGURE 1 is a plan view of a microelectromechanical system ("MEMS") gyroscope formed in accordance with an embodiment of the present invention;

FIGURE 2 is a graphic model of the phase relation between the sense pick-off signal and the motor pick-off signal of the MEMS gyroscope based upon oscillation of a proof mass;

FIGURE 3 is a flow chart of a method for deriving an angular rate from the sense pick up; and

FIGURE 4 is a block diagram of a system to derive rotational rate from the sense pick-off and motor pick-off signals of a MEMS gyroscope.

## DETAILED DESCRIPTION OF THE PREFERRED EMBODIMENT

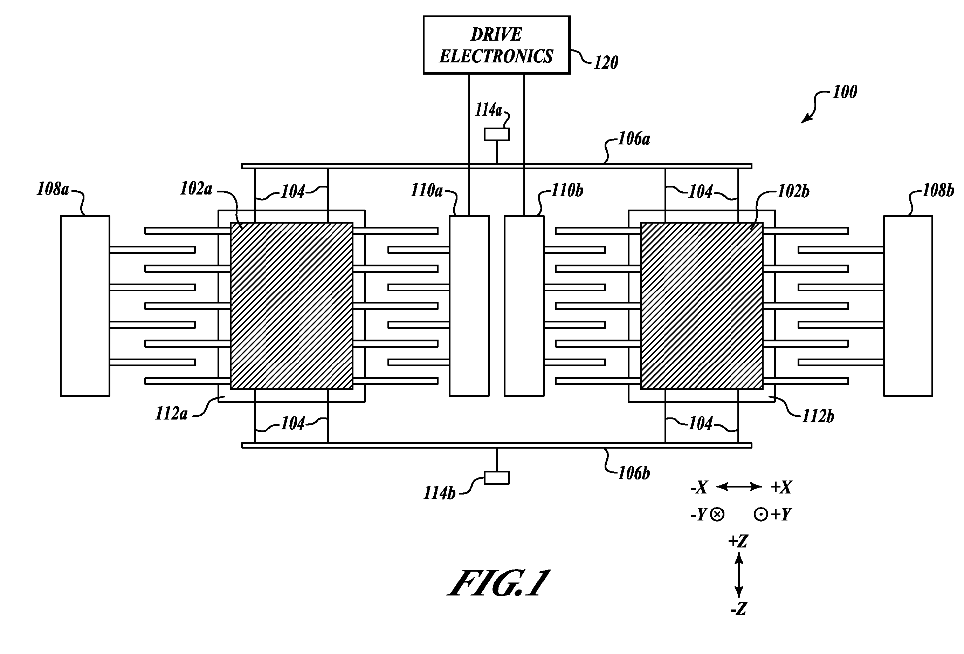

FIGURE 1 is a plan view of a microelectromechanical system (MEMS) gyroscope 100 configured for operation according to an exemplary embodiment. By way of non-limiting example, a substrate forms the MEMS gyroscope 100 and includes at least one proof mass 102a, 102b; a plurality of support beams 104; at least one cross beam 106a, 106b; at least one motor drive comb 108a, 108b; at least one motor pickoff comb 110a, 110b; at least one sense plate 112a, 112b; and at least one anchor 114a, 114b. FIGURE 1 shows two proof masses; however, one or more proof masses may be employed.

The at least one proof mass 102a, 102b is, generally, any mass suitably formed in the course of microelectromechanical machining (micromachining) of the MEMS gyroscope 100. In one embodiment, the at least one proof mass 102a, 102b includes a plate of silicon. Other materials that are compatible with micromachining techniques may also be employed.

The at least one proof mass 102a, 102b is located substantially between the at least one motor drive comb 108a, 108b and the at least one motor pickoff comb 110a, 110b. The at least one proof mass 102a, 102b contains a plurality of comb-like electrodes extending towards both the at least one motor drive comb 108a, 108b and the at least one motor pickoff comb 110a, 110b. While the at least one proof mass 102a, 102b has ten electrodes as depicted in FIGURE 1, the number of electrodes on the at least one proof mass 102a, 102b may be more or less than ten.

The at least one proof mass 102a, 102b is supported above the at least one sense plate 112a, 112b by the plurality of support beams 104. While eight support beams 104 are depicted in FIGURE 1, the number of support beams used may be more or less than eight. The plurality of support beams 104 acts as a group of springs allowing the at least one proof mass 102a, 102b to move along a motor axis (also conventionally referred to as the *x*-axis for purposes of orienting the MEMS gyroscope in three-dimensioned space). Deflection along a sense axis (conventionally referred to as the γ-axis) is indicative of rotation about an orienting axis (conventionally referred to as the z-axis). (See FIGURE 1 for axis information.) Deflection along the sense axis is measured as voltage at the at least one sense plate 112a, 112b and provided at the sense pick-off.

The plurality of support beams 104 are generally parallel to the orienting or z-axis and are connected to at least one cross beam 106a, 106b oriented generally parallel to the motor or x-axis. The at least one cross beam 106a, 106b is connected to at least one anchor 114a, 114b thereby to suspend the proof mass 102a, 102b within the MEMS gyroscope 100. While two anchors 114a, 114b are depicted in FIGURE 1, the number of anchors may be more or less than two. In the non-limiting exemplary embodiment, at least one anchor 114a, 114b is positioned along the at least one cross beam 106a, 106b in a manner providing sprung support to the MEMS gyroscope 100.

The at least one motor drive comb 108a, 108b includes a plurality of comb-like electrodes extending towards the at least one proof mass 102a, 102b. While the at least one motor drive comb 108a, 108b has four electrodes as depicted in FIGURE 1, the number of electrodes on the at least one motor drive comb 108a, 108b may be more or less than four. The number of the electrodes on the at least one motor drive comb 108a, 108b may be determined by the number of electrodes on the at least one proof mass 102a, 102b.

The plurality of comb-like electrodes of the at least one proof mass 102a, 102b interdigitate with the electrodes that form the at least one motor drive comb 108a. When opposite charges are placed upon the electrodes of the at least one proof mass 102a, 102b and the electrodes that form the at least one motor drive comb 108a 108b the resulting structure is that of at least one capacitor. Given the small scale of the MEMS gyroscope 100, the Coulomb forces between the plurality of comb-like electrodes of the at least one proof mass 102a, 102b interdigitated with the electrodes that form the at least one motor drive comb 108a dominate and allow the driving of the at least one proof mass 102a, 102b, when suitably charged.

Drive electronics (not shown in FIGURE 1) suitably supply the charge to the at least one motor drive comb 108a, 108b at a drive oscillation frequency. By providing alternating charges to the at least one motor drive comb 108a, 108b at the drive oscillation frequency, the drive electronics cause the at least one proof mass 102a, 102b to oscillate in a manner to emulate a tuning fork vibrating at a natural or resonant frequency along the motor drive axis (x-axis) in response to the charging of the capacitors formed by the plurality of interdigitated comb-like electrodes of the at least one proof mass 102a, 102b and the at least one motor drive comb 108a, 108b.

The at least one motor pickoff comb 110a, 110b includes a plurality of comb-like electrodes extending towards the at least one proof mass 102a, 102b. While the at least one motor pickoff comb 110a, 110b has four electrodes as depicted in FIGURE 1, the number of electrodes on the at least one motor pickoff comb 110a, 110b may be more or less than four. The number of the electrodes on the at least one motor pickoff comb 110a, 110b generally corresponds to the number of electrodes on the at least one proof mass 102a, 102b.

The plurality of interdigitated comb-like electrodes of the at least one proof mass 102a, 102b and the at least one motor pickoff comb 110a, 110b form capacitors in a manner similar to the at least one proof mass 102a, 102b and the electrodes that form the at least one motor drive comb 108a 108b, as described above. Applying any polarity charge to the drive electrodes can only attract the proof mass. So, the drive voltage is one half the frequency of the actual motor motion. Charge placed upon the at least one motor drive comb 108a, 108b excites the at least one proof mass 102a, 102b using electrostatic forces. Charge is placed by applying a driving signal to the at least one motor drive comb 108a, 108b relative to that of the at least one proof mass 102a, 102b. The at least one motor pickoff comb 110a, 110b monitors the excitation or oscillation of the at least one proof mass 102a, 102b by generating MPO signals on electrodes on the at least one motor pickoff comb 110a, 110b. The at least one motor pickoff comb 110a, 110b experiences a voltage responsive to the electrostatic forces applied by the physical movement of at least one proof mass 102a, 102b into and out of proximity to the at least one motor pickoff comb 110a, 110b and the ongoing voltage changes are the MPO signal.

In normal operation of the MEMS gyroscope 100, the at least one motor pickoff comb 110a, 110b provides a sinusoidal voltage to drive electronics 120 (FIGURE 1) which determines an operating frequency of the MEMS gyroscope 100 to indicate a departure in the vibration of the at least one proof mass 102a, 102b from the resonant frequency. If the at least one proof mass 102a, 102b begins to oscillate too fast or too slow to match the resonant frequency, the drive electronics 120 (FIGURE 1), and may trim the drive oscillation frequency such that the at least one proof mass 102a, 102b vibrate again at the resonant frequency.

Referring to the remainder of the MEMS gyroscope 100, at least one sense plate 112a, 112b forms a sensing capacitor with the at least one proof mass 102a, 102b. If an angular rate is applied to the MEMS gyroscope 100 about the orientation axis (the z-axis) while the at least one proof mass 102a, 102b is oscillating along the motor axis (x-axis), a Coriolis force may be detected along the sense axis (y-axis). The MEMS gyroscope 100 senses rotational rate as a result of the Coriolis force working upon the at least one proof mass 102a, 102b. The Coriolis force 'pushes' the proof mass orthogonal to the motor axis at the motor frequency with the peak push at peak motor velocity. The rate information is a capacitive signal proportional to the displacement of the proof mass in the sense axis direction, at motor frequency and in phase with the peak motor velocity. The sensing capacitor includes the at least one sense plate 112a, 112b in concert with the at least one proof mass 102a, 102b. Movement of the at least one proof mass 102a, 102b along the sense axis (y-axis) provides an alternating voltage known as the sense pick-off signal or the SPO signal. The output of the MEMS gyroscope 100 includes the SPO signal. The at least one sense plate 112a, 112b is suitably connected to provide the SPO signal to the sense electronics (not shown in FIGURE 1). The sense electronics receives the SPO signal indicative of the change in capacitance as the at least one proof mass 102a, 102b moves either towards or away from the at least one sense plate 112a, 112b and develop an angular rate based upon the amplitude of the SPO signal in normal demodulating operation.

As discussed above, during operation of the MEMS gyroscope 100, demodulation of the SPO signal resulting from the driven movement of the at least one proof mass 102a, 102b over the at least one sense plate 112a, 112b, at the resonant frequency generates the SPO signal and simultaneously, by movement relative to the at least one motor pickoff comb 110a, 110b, the MPO signal is generated, the MPO thereby being indicative of linear movement along the x-axis. As the at least one sense plate 112a, 112b is geometrically fixed relative to the at least one motor pickoff comb 110a, 110b, the MPO signal and SPO signal generally share the same frequency as both are related to movement of the at least one proof mass 102a, 102b. The relationship between the MPO signal and SPO signal is changed by the physical displacement of the at least one proof mass 102a, 102b due to rotational rate about the z-axis. Such rate may either advance or retard the SPO signal due to movement toward or from the at least one sense plate 112a, 112b while the at least one proof mass 102a, 102 continues to oscillate.

Even where the frequency of the oscillation of the at least one proof mass 102a, 102 is changing, the frequency of the MPO signal and the SPO signal are a function of the frequency of the oscillation of the at least one proof mass 102a, 102, and therefore both of their frequencies vary correspondingly. If the frequency of the oscillation of the at least one proof mass 102a, 102 varies, the SPO signal can be studied relative to the MPO signal. Any variations in timing of the SPO signal relative to the MPOS signal are the result of displacement of the at least one proof mass 102a, 102 along the y-axis.

Generally speaking, the MPO signal is well described by a parametric equation to describe harmonic motion:

$V_{MPo}=x=A\times\sin(at+\delta)$ where A is an amplitude, $a$ is a frequency, and $\delta$ is an offset between the signals introduced by the displacement of the at least one proof mass 102a, 102 along the y-axis.

Likewise, the SPO signal is well described by a similar parametric equation to describe harmonic motion:

$$V_{SPO} = y = B\times\sin(bt)$$

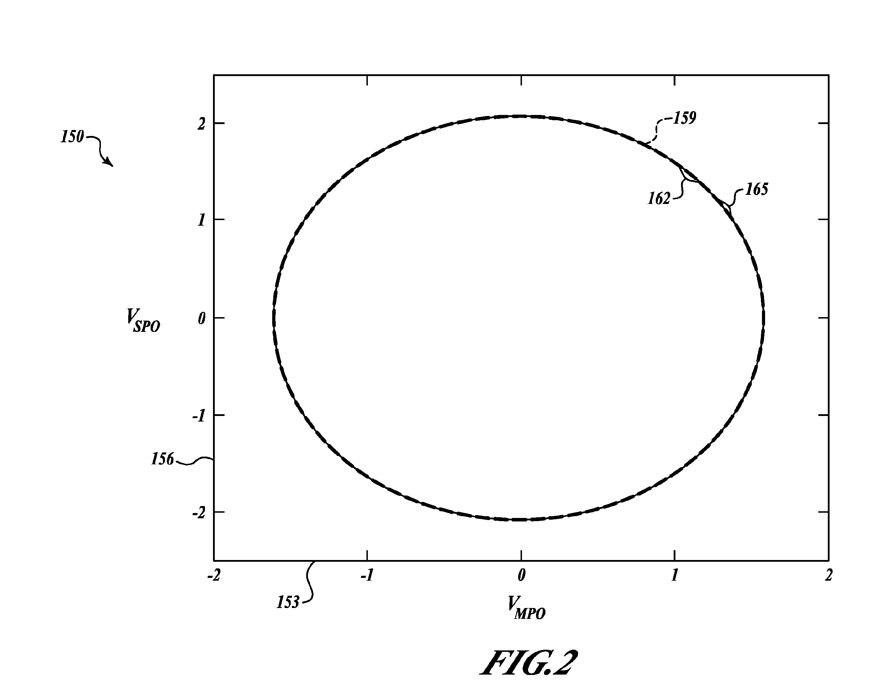

Referring, then, to FIGURE 2, a Lissajous figure 150 relating the MPO signal to the SPO signal generated by a MEMS gyroscope 100 (FIGURE 1) has a generally elliptical shape. In mathematics, the Lissajous curve (Lissajous figure or Bowditch curve) is the graph of the system of parametric equations which relate complex harmonic motion. This family of curves was investigated by Nathaniel Bowditch in 1815, and later in more detail by Jules Antoine Lissajous.

The Lissajou figure 150 plots the MPO signal instantaneous voltage against the SPO signal instantaneous voltage. An abscissa 153 of the Lissajou figure 150 represents variation in the voltage of the MPO signal monitored at the at least one motor pickoff comb 110a, 110b (FIGURE 1) while an ordinate 156 represents the SPO monitored at least one sense plate 112a, 112b (FIGURE 1). The appearance of the Lissajou figure 150 is highly sensitive to the ratio of the frequencies $a/b$. Because, as earlier discussed, the frequencies of the MPO signal and the SPO signal are generally equal, the derived Lissajou figure 150, as depicted in FIGURE 2, the figure is an ellipse, being elongate along the y-axis due to the greater amplitude of the non-limiting exemplary ratio of amplitudes B/A. Any Lissajou figure 150 derived from the SPO against the MPO signals will result in ellipses with special cases including circles (A = B, $\delta = \pi/2$ radians). Even should $a$ and $b$ vary according to time, because the ratio of frequencies, $a$ to $b$ retains the approximate relationship $a = b$.

Advantageously, then, during the startup as the frequency of the oscillation of the at least one proof mass 102a, 102 (FIGURE 1) ranges from zero to its natural resonant frequency, the resulting Lissajous figure 150 will remain elliptical. Therefore, the relationship of the SPO signal to the MPO signal will allow derivation of rotational rate even before the frequency of the oscillation of the at least one proof mass 102a, 102 reaches its natural resonant frequency.

An idealized ellipse 159 has been superimposed on the Lissajous figure 150. Actual tracings, such as a first iteration 162 and a second iteration 165 show departures from the idealized ellipse 159. Such departures are the result of the relative advancement and retardation of the SPO signal (plotted on the ordinate 156) relative to the MPO signal (plotted on the abscissa 153). Measurement of these departures from synchronicity yield a signal corresponding to the rotational rate of the MEMS gyroscope 100 (FIGURE 1) about the z-axis.

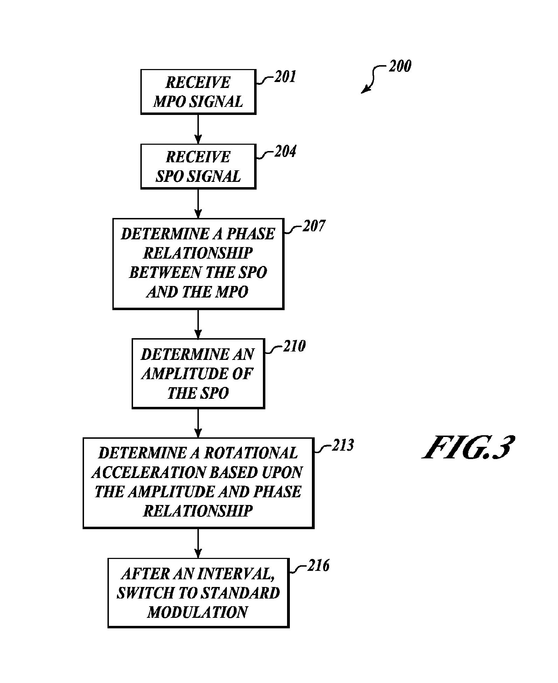

FIGURE 3 illustrates a method 200 for resolving an rotational rate of a MEMS gyroscope based upon a relationship of sensed voltage at a motor pick off and a sense pick-off begins at a block 201 where an MPO signal is received at a processor from a motor pick-off. Movement of a proof mass at a resonant frequency is necessary to measure the rotational rate resulting from Coriolis forces acting upon the proof mass. The regular recurrent movement of the proof mass is sensed at the motor pick-off and the signal received from the motor pick-off includes voltages indicative of that regular recurrent movement.

At a block 204, an SPO signal is received at the processor from a sense pick-off. The SPO signal is generally of the same frequency as the MPO signal received in the block 201 but may differ in amplitude and phase based upon displacement of the proof mass toward or away from a sense plate.

At a block 207, the SPO signal is compared with the MPO signal to determine a phase relationship. The phase relationship can be detected by comparing the onset of the SPO signal to the MPO signal. In a non-limiting embodiment, each of the SPO signal and the MPO signal are converted to digital pulses. Conventional digital signal processing readily determines onsets of the digital pulses and thereby determines which of the SPO and MPO signals is leading.

Analog signal processing can be used in a manner consistent with the generation of the Lissajous figure 150 (FIGURE 2), thereby determining whether the SPO signal is said to either lead or lag the MPO signal. Leading or lagging signals give an indication of the direction of the rotational rate of the MEMS gyroscope 100 (FIGURE 1) about the z-axis and are evidenced by the "lean" of the ellipse to either the left or the right.

At a block 210, an amplitude of the SPO is determined. In one non-limiting embodiment, the amplitude of the SPO signal could be detected by passing the SPO signal through a full wave rectifier followed by a low-pass filter resulting in a generally DC voltage. The generally DC voltage is converted by use of an analog-to-digital converter. An output of the analog-to-digital converter would correspond to a measure of the rotational rate and could be suitably compensated to read directly upon rate. The amplitude is indicative of the magnitude of the rotational rate of the MEMS gyroscope 100 (FIGURE 1) about the z-axis.

At a block 210, based upon the amplitude and the phase relationship, a value is retrieved indicative of rotational rate of the MEMS gyroscope 100 (FIGURE 1) about the z-axis. In one non-limiting embodiment, rotational rate values are retrieved from a look-up table based upon the derived amplitude and phase relationship.

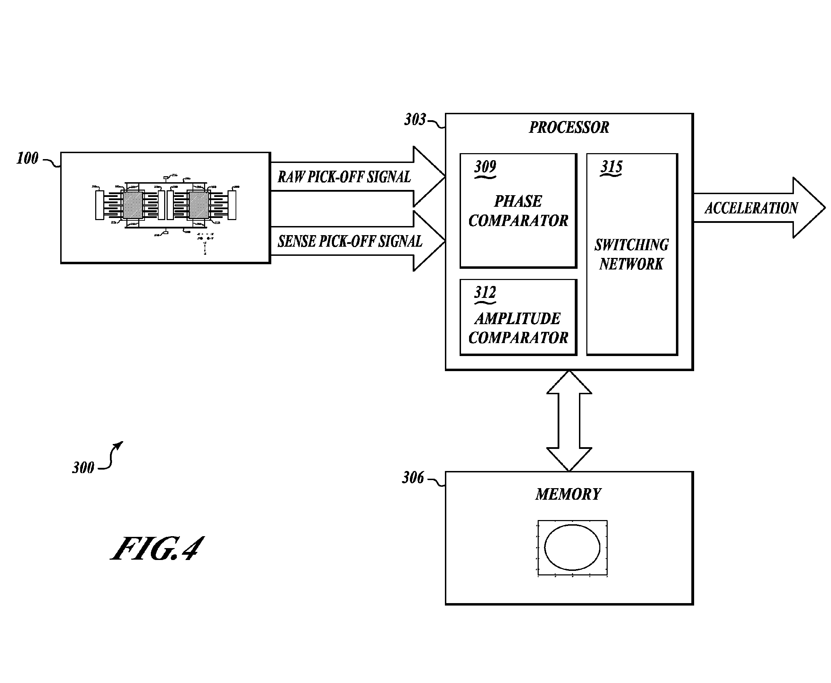

Referring to FIGURE 4, a system 300 to resolve an MPO signal sensed at a motor pick off of a MEMS gyroscope and an SPO signal sensed at sense pick-off signal includes the MEMS gyroscope 100, a processor 303, and a processor-readable memory 306. On the processor-readable memory 306 reside instructions to the processor 303 to facilitate the resolution of the MPO signal and the SPO signal into a rotational rate about a z-axis relative to the MEMS gyroscope 100. The processor 303 may, optionally, include a single processor or a processor assembly. In a non-limiting embodiment, the processor 303 is the same processor used to demodulate the SPO signal according to the MPO signal in conventional operation.

In operation, the MEMS gyroscope 100 provides both of the MPO signal and the SPO signal to the processor 303. When a signal exists at the input of the processor, the processor begins signal processing according to the instructions stored on the processor-readable memory 306. The processor 303 includes a phase comparator 309 for determining whether the SPO signal leads or lags the MPO signal. Either of analog or digital means may be used. In one non-limiting embodiment, the MPO and SPO signals are digitized into series of digital pulses in the phase comparator 309 and the onsets of the digital pulses are compared. In another non-limiting embodiment, Fourier transforms such as the Fast Fourier Transform are used to deconstruct both of the MPO and SPO signals. Relative phases of the MPO signal and the SPO signal are compared as a result of the application of the transform.

The processor 303, in response to execution of instructions stored in the processor-readable memory 306, in turn, passes the SPO signal to an amplitude comparator 312. The amplitude comparator 312 may, optionally, be a rectifier rectifying the SPO signal to generate, in one embodiment, a full-wave rectified SPO signal. Additionally, the full-wave rectified SPO signal may be additionally filtered through a low-pass filter to derive the generally DC signal representing the amplitude of the SPO signal.

Because a generally one-to-one relationship between amplitude and rotational rate exists, a look-up table stored on the memory 306 can be used to relate amplitude to rate. In further embodiments, the look-up table might include the further resolution of rate according to a sensed frequency of either of the MPO or SPO signals. In such a manner, the magnitude of the rotational rate may be directly output from the processor 303. The direction of the rotational rate may also be determined by the phase relationship and directly output as either positive or negative. Optionally, the look-up table might also retrieve according to the phase relationship of the SPO signal to the MPO signal.

The processor 303 also, optionally, movement of the proof mass at a resonant frequency is necessary to measure the Coriolis forces on the proof mass. The regular recurrent movement of the proof mass is sensed at the motor pick off and the signal received from the motor pick off includes voltages indicative of that regular recurrent movement includes a switching network 315 that switches the resolution of the MPO and SPO signals to conventional demodulation of the SPO signal by conventional means. Generally, a validity interval determines the switching duration. In one non-limiting embodiment, the validity interval is temporally based such that, in one non-limiting example, the resolution of the MPO and SPO signals occurs for ½ a second to allow the proof mass 102a, 102b (FIGURE 1) within the MEMS gyroscope 100 to reach its natural resonant oscillation frequency. In another embodiment, the validity interval is based upon a frequency of the MPO signal, allowing the signal to range to the natural resonant oscillation frequency of the proof mass 102a, 102b (FIGURE 1) within the MEMS gyroscope 100. Upon the expiration of the validity interval, conventional demodulation of the SPO signal occurs.

While a MEMS tuning fork gyroscope is employed to illustrate the invention, the present invention also applies to other MEMS gyroscopes that use the Coriolis rate to detect rotation, such as an angular rate sensing gyroscope.

The embodiments of the invention in which an exclusive property or privilege is claimed are defined as follows:

## Claims

1. A signal processor for a MEMS gyroscope comprising:

   a motor pick-off input to receive a motor pick-off signal from the MEMS gyroscope;
   a sense pick-off input to receive a sense pick-off from the MEMS gyroscope;
   a phase comparator to determine a phase-angle to relate the sense pick-off signal to the motor pick-off signal to produce a phase angle; and
   an amplitude comparator to determine an amplitude of the sense pick-off signal.

2. The signal processor of Claim 1, wherein the signal processor further comprises:

   a switching network to respond upon an expiration of a validity interval,

   wherein the validity interval includes one of a temporal interval or a frequency interval relative to the motor pick-off frequency.

3. The signal processor of Claim 1, wherein the phase comparator includes one of an analog to digital converter or a Fast Fourier Transform.

4. The signal processor of Claim 1, wherein the amplitude comparator includes a rectifier and a low-pass filter.

5. The signal processor of Claim 1, further comprising a look-up engine to retrieve a rotational rate based upon the amplitude and phase relation.

6. A method deriving a magnitude and direction of angular rate, the method comprising:

   receiving a motor pick-off signal received from a motor pick-off of from a MEMS gyroscope;
   receiving a sensing pick-off signal received from a sensing pick-off from the MEMS gyroscope;
   determining a phase relationship between the motor pick-off signal and the sensing pick-off signal, the phase relationship indicating a direction of rotational rate; and
   determining an amplitude of the sensing pick-off signal, the amplitude indicating a magnitude of rotational rate.

7. The method of Claim 6, the method further comprising:

   retrieving an angular rate based upon the phase relationship and the amplitude.

8. The method of Claim 6, wherein the determining the amplitude includes one of rectifying the sensing pick-off signal to create a rectified sensing pick-off signal and filtering the rectified pick-off signal according to a low-pass filter to create a generally DC voltage corresponding to the amplitude or determining an angular rate according to the amplitude.

9. The method of Claim 6, wherein the determining the phase relationship includes determining the relationship between the motor pick-off signal and the sensing pick-off signal is one of a group consisting of leads or lags and determining a direction of rotation according to the phase relationship.

10. The method of Claim 6, further comprising:

   switching according to a validity interval,

   wherein the validity interval includes one of a temporal interval or a frequency interval relative to the motor pick-off frequency.

*FIG.1*

**FIG.2**

FIG.3

**FIG.4**

*303* — PROCESSOR

*100*

RAW PICK-OFF SIGNAL

SENSE PICK-OFF SIGNAL

*309* PHASE COMPARATOR

*312* AMPLITUDE COMPARATOR

*315* SWITCHING NETWORK

ACCELERATION

*300*

*306* MEMORY

EP 1 918 676 A2